(19) Europäisches Patentamt
European Patent Office
Office européen des brevets

(11) Veröffentlichungsnummer: **0 135 794**
**A2**

# (12) EUROPÄISCHE PATENTANMELDUNG

(21) Anmeldenummer: **84109880.9**

(22) Anmeldetag: **20.08.84**

(51) Int. Cl.⁴: **C 08 L 83/10,** C 08 L 51/04
//
(C08L83/10, 51:04, 57:00),
(C08L51/04, 83:10, 57:00)

(30) Priorität: **31.08.83 DE 3331438**
**24.12.83 DE 3347071**

(43) Veröffentlichungstag der Anmeldung: **03.04.85**
**Patentblatt 85/14**

(84) Benannte Vertragsstaaten: **DE FR GB IT NL**

(71) Anmelder: **BAYER AG, Konzernverwaltung RP**
**Patentabteilung, D-5090 Leverkusen 1 Bayerwerk (DE)**

(72) Erfinder: **Paul, Winfried, Dr., Bethelstrasse 22,**
***D-4150 Krefeld (DE)***
Erfinder: **Kress, Hans-Jürgen, Dr., Scheiblerstrasse 111,**
**D-4150 Krefeld (DE)**
Erfinder: **Stix, Wolfgang, Dr., Freudenbergstrasse 56b,**
**D-6901 Neckarsteinach (DE)**
Erfinder: **Lindner, Christian, Dr., Riehler Strasse 200,**
**D-5000 Köln 60 (DE)**
Erfinder: **Neuray, Dieter, Dr., 1822 Tragone Drive,**
**Pittsburgh, PA 15241 (US)**
Erfinder: **Nouvertné, Werner, Dr., Scheiblerstrasse 95,**
**D-4150 Krefeld (DE)**

(54) **Thermoplastische Formmassen auf Basis von Polysiloxan-Polycarbonat-Blockcopolymeren.**

(57) Gegenstand der vorliegenden Erfindung sind
A. Thermoplastische Formmassen auf Basis von Polydiorganosiloxan-Polycarbonat-Blockcopolymeren und ABS-Polymerisaten
und
B. Thermoplastische Formmassen auf Basis von Polysiloxan-Polycarbonat-Blockcopolymer, kautschukelastischem Polymerisat und gegebenenfalls Polyalkylenterephthalat.

EP 0 135 794 A2

BAYER AKTIENGESELLSCHAFT 5090 Leverkusen, Bayerwerk
Konzernverwaltung RP
Patentabteilung PS/Ke-c

**Thermoplastische Formmassen auf Basis von Polysiloxan-Polycarbonat-Blockcopolymeren**

Gegenstand der vorliegenden Erfindung sind

A. Thermoplastische Formmassen auf Basis von Polydiorganosiloxan-Polycarbonat-Blockcopolymeren und ABS-Polymerisaten

und

B. Thermoplastische Formmassen auf Basis von Polysiloxan-Polycarbonat-Blockcopolymer, kautschukelastischem Polymerisat und gegebenenfalls Polyalkylenterephthalat

A.

Thermoplastische Mischungen aus Polycarbonat auf Basis aromatischer Dihydroxyverbindungen und ABS-Polymerisaten sind grundsätzlich bekannt (DE-PS 1 170 141 und DE-AS 1 810 993). Mischungen aus aromatischen Polycarbonaten mit speziellen ABS-Systemen werden in den DE-PS 2 259 565 (Le A 14 751) DE-OS 2 329 548 (Le A 15 106) und DE-OS 2 329 546 (Le A 15 107) beschrieben.

An solche Mischungen werden sehr hohe technologische Anforderungen gestellt. Gefragt sind hierbei insbesondere hohe Zähigkeiten, vor allem bei tiefen Temperaturen, sowie Verbesserungen des Brandverhaltens (Abtropfneigung).

Solche Eigenschaftsverbesserungen ließen sich bisher nur durch gezielte Variation des Kautschuks und zusätzlichen Einsatz von Flammschutzmitteln erreichen.

Es war daher überraschend, daß schon durch Einsatz eines modifizierten Polycarbonats dieses verbesserte Gesamteigenschaftsbild erreicht werden konnte. Gleichzeitig war es überraschend, daß durch Mischen des durch einen Diorganosiloxanblock modifizierten Polycarbonats mit ABS-Polymerisaten, trotz des Si-Blocks, Formmassen mit guten Eigenschaften erhalten wurden.

Aus der EU-OS 00 73 067 sind zwar Mischungen aus aromatischen Polyestern, Siloxan-Polycarbonat-Blockcopolymeren und thermoplastischen Styrolharzen oder thermoplastischen Alkylacrylatharzen bekannt, wobei jedoch keine besonderen technischen Vorteile für den Zusatz von Styrol- bzw. Alkylacrylatharz geltend gemacht werden.

Gegenstand der vorliegenden Erfindung sind thermoplastische Formmassen auf Basis aromatischer Polycarbonate und ABS-Polymerisate, die eine verbesserte Zähigkeit bei Schlagbeanspruchung (Kerbschlagzähigkeit), insbesondere bei tiefen Temperaturen, sowie gleichzeitig ein besseres Brandverhalten, gekennzeichnet durch einen höheren Sauerstoffindex und verbessertes Abtropfverhalten, aufweisen.

Gegenstand der vorliegenden Erfindung sind somit thermoplastische Formmassen enthaltend

(a) 20 - 80 Gew.-Tl. Polydiorganosiloxan-Polycarbonat-Blockcopolymer, mit mittlerem Molekulargewicht $\bar{M}_w$ von 10.000 bis 200.000 und mit einem Gehalt an aromatischen Carbonatstruktureinheiten zwischen etwa 75 Gew.-% und 97,5 Gew.-% und einem Gehalt an Polydiorganosiloxanstruktureinheiten zwischen 25 Gew.-% und 2,5 Gew.-%, wobei die Blockcopolymeren, ausgehend von $\alpha,\omega$-Bishydroxyaryloxyendgruppenhaltigen Polydiorganosiloxanen, mit einem Polymerisationsgrad $\bar{P}_n$ von 5 - 100 hergestellt werden,

(b) 70 - 5 Gew.-Tl. eines Pfropfpolymerisats von ethylenisch ungesättigten Monomeren auf Kautschuke aus der Reihe der Dienmonomer-, Alkylacrylat- und EPDM-Kautschuke und

(c) 5 - 60 Gw.-Tl. eines kautschukfreien, thermoplastischen Vinylmonomerpolymerisats, wobei die Summe der Gew.-Tl. der Komponenten (a) + (b) + (c) jeweils 100 Gew.-Tl. beträgt.

Die Komponente (a) kann auch eine Mischung aus Polydiorganosiloxan-Polycarbonat-Blockcopolymeren mit üblichen polysiloxanfreien, thermoplastischen Polycarbonaten sein, wobei der Gesamtgehalt an Polydiorganosiloxanstruktureinheiten in dieser Mischung zwischen 2,5 und 25 Gew.-% beträgt.

Polydiorganosiloxan-Polycarbonat-Blockcopolymere (a) im

Sinne der Erfindung sind Reaktionsprodukte aus Diphenolen, ihren reaktionsfähigen Derivaten auf Basis von Polydiorganosiloxan-Oligomeren mit reaktiven Endgruppen bzw. Mischungen der Oligomeren, Kohlensäurevorläufern oder Mischungen dieser Reaktionsprodukte.

Solche Polydiorganosiloxan-Polycarbonat-Blockcopolymere sind dadurch gekennzeichnet, daß sie in der Polymerkette einerseits aromatische Carbonatstruktureinheiten (1) und andererseits Aryloxyendgruppen-haltige Polydiorganosiloxane (2) enthalten,

$$-O-Ar-O-\overset{\overset{O}{\|}}{C}-O-Ar-O- \qquad (1)$$

$$-O-Ar-O(-\underset{R}{\overset{R}{\overset{|}{\underset{|}{Si}}}}-O-)_a-(-\underset{R^1}{\overset{R}{\overset{|}{\underset{|}{Si}}}}-O-)_b-(-\underset{R^1}{\overset{R^1}{\overset{|}{\underset{|}{Si}}}}-O-)_c-Ar-O \qquad (2)$$

worin

Ar gleiche oder verschiedene Arylenreste aus Diphenolen sind und

R und $R^1$ gleich oder verschieden sind und lineares Alkyl, verzweigtes Alkyl, Alkenyl, halogeniertes lineares Alkyl, halogeniertes verzweigtes Alkyl, Aryl oder halogeniertes Aryl, vorzugsweise aber Methyl bedeuten,

und

die Anzahl der Diorganosiloxy-Einheiten $n = a + b + c =$ 5 bis 100, vorzugsweise 20 bis 80, ist.

Alkyl ist in vorstehender Formel (1) beispielsweise $C_1$-$C_{20}$-Alkyl; Alkenyl ist in vorstehender Formel (1) beispielsweise $C_2$-$C_6$-Alkenyl; Aryl ist in vorstehender Formel (1) $C_6$-$C_{14}$-Aryl. Halogeniert bedeutet in vorstehender Formel teilweise oder vollständig chloriert, bromiert oder fluoriert. Beispiele für Alkyle, Alkenyle, Aryle, halogenierte Alkyle und halogenierte Aryle sind Methyl, Ethyl, Propyl, n-Butyl, tert.-Butyl, Vinyl, Phenyl, Naphthyl, Chlormethyl, Perfluorbutyl,Perfluoroctyl und Chlorphenyl.

Derartige Polydiorganosiloxan-Polycarbonat-Blockcopolymere sind z.B. aus US-PS 3 189 662, US-PS 3 821 325 und US-PS 3 832 419 bekannt. In der einschlägigen Literatur werden ihre verbesserten mechanischen Eigenschaften bei tiefen Temperaturen beschrieben (z.B. B. M. Beach, R.P. Kambour und A. R. Schultz, J. Polym. Sci., Polym. Lett. Ed. 12, 247 (1974)).

Bevorzugte Polydiorganosiloxan-Polycarbonat-Blockcopolymere mit mittleren Molekulargewichten $\bar{M}_w$ (Gewichtsmittel wie durch Ultrazentrifugation oder Streulichtmessung bestimmt) von 10.000 bis 200.000 und mit einem Gehalt an aromatischen Carbonatstruktureinheiten zwischen etwa 75 Gew.-% und 97,5 Gew.-% und mit einem Gehalt an Diorganosiloxy-Einheiten zwischen 25 und 2,5 Gew.-% werden hergestellt, indem man $\alpha,\omega$-Bishydroxyaryloxyendgruppenhaltige Polydiorganosiloxane zusammen mit anderen Diphenolen, gegebenenfalls unter Mitverwendung von Kettenabbrechern in den üblichen Mengen und gegebenenfalls unter Mitverwendung von Verzweigern in den üblichen Mengen, z.B. nach dem Zweiphasengrenzflächenverfahren (s. dazu H. Schnell, Chemistry and Physics of Polycarbonates,

Polymer Rev., Vol. IX, Seite 27 ff., Interscience Publishers New York, 1964) umsetzt, wobei jeweils das Verhältnis der bifunktionellen phenolischen Reaktanten so gewählt wird, daß daraus der erfindungsgemäße Gehalt an aromatischen Carbonatstruktureinheiten und Diorganosiloxy-Einheiten resultiert.

Derartige $\alpha,\omega$-Bishydroxyaryloxyendgruppen-haltige Polydiorganosiloxane sind z.B. aus US 3 419 634 bekannt.

Zur Herstellung der $\alpha,\omega$-Bishydroxyaryloxyendgruppen-haltigen Polydiorganosiloxane sowie der Polydiorganosiloxan-Polycarbonat-Blockcopolymeren einzusetzende Diphenole sind

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis(hydroxyphenyl)-ether
Bis-(hydroxyphenyl)-sulfoxide
Bis-(hydroxyphenyl)-sulfone und
$\alpha,\omega$-Bis-(hydroxyphenyl)-diisopropylbenzole

sowie deren kernalkylierte und kernhalogenierte Verbindungen. Diese und weitere geeignete aromatische Dihydroxyverbindungen sind z.B. in den US-Patentschriften 3 028 365 und 2 999 846 und in den deutschen Offenlegungsschriften 2 063 050 und 2 211 957 aufgeführt.

Bevorzugte Diphenole sind beispielsweise

2,2-Bis-(4-hydroxyphenyl)-propan
1,1-Bis-(4-hydroxyphenyl)-cyclohexan
2,2-Bis-(3,5-dichlor-4-hydroxyphenyl)-propan
2,2-Bis-(3,5-dibrom-4-hydroxyphenyl)-propan
2,2-Bis-(3,5-dimethyl-4-hydroxyphenyl)-propan
Bis-(3,5-dimethyl-4-hydroxyphenyl)-methan
Bis-(4-hydroxyphenyl)-sulfid

Die geeigneten Diphenole können sowohl allein als auch als Mischungen eingesetzt werden.

Als Verzweiger sind solche mit drei oder mehr als drei funktionellen Gruppen, insbesondere solche mit drei oder mehr als drei phenolischen Hydroxylgruppen einsetzbar, wobei die üblicherweise bekannten Mengen an Verzweiger zwischen 0,05 und 2 Mol.-%, bezogen auf eingebaute Diphenole, einzuhalten sind. Die Herstellung verzweigter Polycarbonate ist beispielsweise in den DT-OS 1 570 533 und DT-OS 1 595 762 sowie in US-PS 3 544 514 beschrieben.

Einige der verwendbaren Verbindungen mit drei oder mehr als drei phenolischen Hydroxylgruppen sind beispielsweise 2,4-Bis-(4-hydroxyphenyl-isopropyl)-phenol, 2,6-Bis-(2'-hydroxy-5'-methyl-benzyl)-4-methylphenol, 2-(4-hydroxyphenyl)-2-(2,4-Dihydroxyphenyl)-propan und 1,4-Bis-(4,4'-dihydroxytriphenyl-methyl)-benzol. Einige der sonstigen trifunktionellen Verbindungen sind 2,4-Dihydroxybenzoesäure, Trimesinsäure, Cyanurchlorid und 3,3-Bis-(4-hydroxyphenyl)-2-oxo-2,3-dihydroindol sowie 3,3-Bis-(4-hydroxy-3-methyl-phenyl)-2-oxo-2,3-dihydroindol.

Als Kettenabbrecher bei der Herstellung nach dem Zweiphasengrenzflächenverfahren sind aromatische Verbindungen mit einer funktionellen Gruppe wie aromatische Säurehalogenide oder Phenole, insbesondere die üblicherweise gebräuchlichen Phenole wie beispielsweise p-tert.-Butylphenol, p-Chlorphenol, 2,4,6-Tribromphenol und Phenol in der üblichen Menge einsetzbar, die sich nach dem jeweils einzustellenden Molekulargewicht der erfindungsgemäßen Blockcopolymeren bestimmt. Im allgemeinen werden 0,5 Mol.-% bis 10,0 Mol.-%, bezogen auf eingesetzte Diphenole, eingesetzt.

Pfropfpolymerisate (b) im Sinne der Erfindung sind solche, in denen auf einen Kautschuk entweder ein Monomer aus der Reihe Styrol, Methylmethacrylat oder eine Monomermischung von 95 - 50 Gew.-% Styrol, α-Methylstyrol, Methylmethacrylat oder Mischungen daraus und 5 - 50 Gew.-% Acrylnitril, Methylmethacrylat, Maleinsäureanhydrid, N-substituierte Maleinimide oder Mischungen daraus pfropfpolymerisiert sind. Geeignete Kautschuke sind insbesondere Polybutadien, Butadien/Styrol-Copolymerisate mit bis zu 30 Gew.-% einpolymerisiertem Styrol, Copolymerisate von Butadien und Acrylnitril mit bis zu 20 Gew.-% Acrylnitril oder Copolymerisate von Butadien mit bis zu 20 Gew.-% eines niederen Alkylesters von Acryl- oder Methacrylsäure (z.B. Methylacrylat, Ethylacrylat, Methylmethacrylat und Ethylmethacrylat).

Weitere geeignete Kautschuke sind z.B. Polyisopren oder Polychloropren. Geeignet sind weiterhin Alkylacrylatkautschuke auf der Basis von $C_1$-$C_8$-Alkylacrylaten, insbesondere Ethyl-, Butyl-, Ethylhexylacrylat. Diese Alkylacrylatkautschuke können gegebenenfalls bis zu 30 Gew.-% Monomere wie Vinylacetat, Acrylnitril, Styrol, Methylmethacrylat, Vinylether copolymerisiert enthalten. Diese Alkylacrylatkautschuke können weiterhin kleinere Mengen (bis zu 50 Gew.-%) vernetzend wirkender ethylenisch ungesättigter Monomere enthalten. Solche sind z.B. Alkylendioldi(meth)-acrylate, Polyesterdi-(meth)-acrylate, Di-, Tri-vinylbenzol, Triallylcyanurat, Allyl-(meth)-acrylat, Butadien, Isopren etc. Solche Alkylacrylate sind bekannt. Acrylatkautschuke als Pfropfgrundlage können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten. Andere geeignete Kautschuke sind z.B. EPDM-Kautschuke, also Kautschuke aus Ethylen, Propylen und einem unkonjugierten Dienmonomer.

Bevorzugt sind Dienmonomer- oder Alkylacrylatkauschuke.

Die Pfropfmischpolymerisate (b) enthalten 5 - 80 Gew.-%, insbesondere 20 - 70 Gew.-%, Kautschuk und 95 - 20 Gew.-%, insbesondere 80 bis 30 Gew.-%, pfropfcopolymerisierte Monomere. Die Kautschuke liegen in diesen Pfropfmischpolymerisaten in Form wenigstens partiell vernetzter Teilchen einer mittleren Teilchengröße von 0,09 bis 5 µm,

insbesondere von 0,1 bis 1 µm, vor. Derartige Pfropfmischpolymerisate werden durch radikalische Pfropfcopolymerisation von Monomeren aus der Reihe Styrol, α-Methylstyrol, Acrylnitril, Methylmethacrylat, Maleinsäureanhydrid in Gegenwart der zu pfropfenden Kautschuke hergestellt und sind durchweg bekannt. Bevorzugte Herstellungsverfahren für solche Pfropfmischpolymerisate sind die Emulsions-, Lösungs-, Masse- oder Suspensionspolymerisation.

Besonders bevorzugt sind sogenannte ABS-Polymerisate.

Die kautschukfreien Vinylmonomerpolymerisate (c) können aus den Pfropfmonomeren oder ähnlichen Monomeren aufgebaut sein, insbesondere aus wenigstens einem Monomeren aus der Reihe Styrol, α-Methylstyrol, Halogenstyrol, Acrylnitril, Methacrylnitril, Methylmethacrylat, Maleinsäureanhydrid, Vinylacetat und N-substituiertes Maleinimid. Es handelt sich bevorzugt um Copolymerisate aus 95 - 50 Gew.-% Styrol, α-Methylstyrol, Methylmethacrylat oder Mischungen daraus mit 5 - 50 Gew.-% Acrylnitril, Methacrylnitril, Methylmethacrylat, Maleinsäureanhydrid oder Mischungen daraus. Solche Copolymere entstehen häufig bei der Pfropfmischpolymerisation als Nebenprodukte, besonders dann, wenn große Mengen Monomere auf kleine Mengen Kautschuk gepfropft werden. Es ist dabei möglich, neben oder anstelle der so entstandenen Copolymeren noch getrennt hergestellte Copolymere dieser Art zuzumischen. Andererseits müssen die in den Pfropfpolymeren vorliegenden ungepfropften Harzanteile nicht unbedingt chemisch identisch sein mit zugemischtem thermoplastischem Vinylpolymerisat (c).

Derartige getrennt hergestellte Copolymere sind harzartig, thermoplastisch und kautschukfrei; es sind insbesondere Copolymere aus Styrol und/oder α-Methylstyrol mit Acrylnitril, gegebenenfalls in Mischung mit Methylmethacrylat.

Besonders bevorzugte Copolymere bestehen aus 20 - 40 Gew.-% Acrylnitril und 80 - 60 Gew.-% Styrol oder α-Methylstyrol. Solche Copolymermassen sind bekannt und lassen sich insbesondere durch radikalische Polymerisationsprozesse, insbesondere durch Emulsions-, Suspensions-, Lösungs- oder Massepolymerisation herstellen. Die Copolymeren besitzen vorzugsweise Molekulargewichte von 15.000 bis $2 \cdot 10^5$.

Die erfindungsgemäßen Formmassen können durch Vermischen der Einzelkomponenten erhalten werden. In einer bevorzugten Herstellungsmethode wird zunächst eine Latex eines Pfropfcopolymerisates (b) ausgefällt und getrocknet. Das so erhaltene Pulver wird dann mit dem Polydiorganosiloxan-Polycarbonat-Blockcopolymer (a) sowie separat hergestelltem Copolymer (c) abgemischt.

Geeignet sind hierfür z.B. Mischwalzwerke, Schneckenextruder oder Innenmischer.

Entweder enthalten die Einzelkomponenten der erfindungsgemäßen Formmassen Zusätze wie Stabilisatoren, Pigmente, Fließmittel, Gleitmittel, Entformungsmittel, Antistatika, und/oder Flammschutzmittel oder diese Zusätze können bei der Vermischung der Einzelkomponenten zugefügt werden. Geeignete Additive sind solche, wie sie für thermoplastische Polycarbonate, Pfropfpolymerisate oder thermoplastische Vinylpolymerisate üblich sind.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art (z.B. für Haushaltsgeräte wie Saftpressen, Kaffeemaschinen, Mixer) oder Abdeckplatten für den Bausektor und Teile für den Kfz-Sektor. Sie werden außerdem auf dem Gebiet der Elektrotechnik eingesetzt, weil sie sich durch sehr gute elektrische Eigenschaften auszeichnen.

Für die nachfolgenden Beispiele wurden folgende Polydiorganosiloxan-Polycarbonat-Blockcopolymere verwendet:

(a1) Ein Copolycarbonat auf Basis von Bisphenol A und 4,5 Gew.-% Polydimethylsiloxan der Blocklänge ($\bar{P}_n$) 40, mit einer relativen Lösungsviskosität von 1,31, gemessen in $CH_2Cl_2$ bei 25°C und einer Konzentration von 0,5 Gew.-%.

(a2) Ein Copolycarbonat auf Basis von Bisphenol A und 10 Gew.-% Polydimethylsiloxan der Blocklänge ($\bar{P}_n$) 40 mit einer relativen Lösungsviskosität von 1,29.

(a3) Ein Vergleichspolycarbonat auf Basis Bisphenol A mit einer relativen Lösungsviskosität von 1,29.

(a4) Ein Copolycarbonat gemäß (a1) mit der Ausnahme, daß es 5 Gew.-% Polydimethylsiloxan enthält und eine relative Lösungsviskosität von 1,29 hat.

Die Bestimmung des Siloxangehaltes, d.h. des Anteils der Dimethylsiloxy-Einheiten in Gew.-%, bezogen auf das Gesamtgewicht des Blockcopolymeren, erfolgte gravimetrisch

und durch Kernresonanzspektrometrie. Als mittlere Siloxanblocklänge wird der durch Bestimmung der Endgruppen am Siloxan-Prepolymer ermittelte Polymerisationsgrad $\bar{P}_n$ angegeben.

Für die aufgeführten Beispiele wurden die Komponenten (b) und (c) als ABS-Polymerisat verwendet.

(b) 40 Gew.-Tl. eines Pfropfpolymerisats, hergestellt durch Pfropfung von 35 Gew.-Tl. Styrol und 15 Gew.-Tl. Acrylnitril auf 50 Gew.-Tl. eines grobteiligen Polybutadiens (gemäß den Herstellungsangaben der DE-AS 1 247 665 und 1 269 360 über Emulsionspolymerisation), wobei der mittlere Teilchendurchmesser der in Latexform vorliegenden Polybutadienpfropfgrundlage zwischen 0,3 und 0,4 µm liegt. (Diese Teilchengrößenangabe sowie entsprechende Angaben im Text stellen mittlere Teilchendurchmesser ($d_{50}$) dar und werden durch Ultrazentrifugenmessung bestimmt (s. dazu: W. Scholtan et al. Colloids. Z. Polymere, 250 (1972), S. 783 - 796));

(c) 60 Gew.-Tl. eines Styrol-Acrylnitril-Copolymerisats mit einem Styrol-Acrylnitril-Verhältnis von 70 : 30 und einer Grenzviskosität von $[\bar{\eta}]$ = 0,79 dl/g (Messung in Dimethylformamid bei 20°C).

Die Formmassen der folgenden Beispiele wurden in einem Doppelwellenextruder bei ca. 260°C durch Vermischen der Einzelkomponenten hergestellt.

Die Bestimmung der Kerbschlagzähigkeit sowie der Schlagzähigkeit erfolgte in Anlehnung an DIN 53 453 / ISO R 179

an Normkleinstäben. Die Bestimmung der Wärmeformbeständigkeit nach Vicat erfolgte gemäß DIN 53 460. Der Sauerstoffindex wurde gemäß ASTM-D 2863 an 10 Normkleinstäben ermittelt. Das Abtropfverhalten wurde mit Stäben der Abmessung 127 x 12,7 x 3,2 mm bestimmt. Hierzu wurden jeweils 5 Probekörper mittels zweier aufeinanderfolgender Zündvorgänge von 10 s Dauer entzündet und die Zahl der brennenden Abtropfer bestimmt. Die Versuchsanordnung entsprach den gemäß UL 94 (Underwriters' Laboratories, Inc.) gegebenen Daten für den UL 94 V-Test.

**Beispiele**

| Zusammensetzung | Dimension | 1. | 2. | 3. | 4. |
|---|---|---|---|---|---|
| | | | | (Vergleich) | |
| Copolycarbonat a1 | % | 70 | - | - | - |
| Copolycarbonat a2 | % | - | 70 | - | - |
| Homopolycarbonat a3 | % | - | - | 70 | - |
| Copolycarbonat a 4 | % | - | - | - | 70 |
| Polymerisat b + c | % | 30 | 30 | 30 | 30 |
| | | | | | |
| Kerbschlagzähigkeit | | | | | |
| bei Raumtemperatur | $kJ/m^2$ | 43* | 29 | 23 | 25 |
| bei -20°C | $kJ/m^2$ | 47* | - | 12 | 19 |
| bei -40°C | $kJ/m^2$ | 29 | 23 | 9 | 20 |
| Vicat-B-Temperatur | °C | 131 | 122 | 127 | 127 |
| $O_2$-Index | % | 26,0 | 25,5 | 23,5 | - |
| Anzahl brennender Abtropfer | | 0 | 0 | 5 | 0 |

*angebrochen

B.

Mischungen aus Polycarbonaten und Polymerisaten sind bekannt (s. beispielsweise japanische Patentpublikation Nr. 18 611/68 (Teijin, Priorität 30.06.65), US-PS 3 663 471 (Le A 11 969), US-PS 3 437 631 (Mo 936), US-PS 4 299 928 (Mo 2062) oder DE-OS 3 114 494).

Gegenüber reinem Polycarbonat weisen solche Mischungen ein verbessertes Zähigkeitsverhalten auf.

Thermoplastische Formmassen auf Basis von Polydiorganosiloxan-Polycarbonat-Blockcopolymeren und Polyalkylenterephthalaten sind bekannt; vgl. z.B. US-PS 4 161 469 und US-PS 4 161 498. Sie sollen sich durch verbesserte Schlagzähigkeit und Wärmeformbeständigkeit auszeichnen.

Aus der EU-OS 00 73 067 sind Mischungen aus aromatischen Polyestern, Siloxan-Polycarbonat-Blockcopolymeren, Polyestern von Diolen mit aromatischen Dicarbonsäuren und thermoplastischen Styrolharzen oder thermoplastischen Alkylacrylatharzen bekannt, die sich gegenüber den aromatischen Polyestern durch verbesserte Kerbschlagzähigkeit auszeichnen.

Obwohl die genannten Formmassen viele positive Eigenschaften besitzen, werden sie manchen speziellen Anforderungen nicht gerecht, wie sie z.B. für Geräteteile im Motorraum von Kraftfahrzeugen erhoben werden, als da sind Wärmeformbeständigkeit, Verzugsfreiheit, Benzinbeständigkeit und hohe Tieftemperaturzähigkeit.

 0135794

Überraschenderweise wurde nun gefunden, daß Abmischungen aus Polydiorganosiloxan-Polycarbonat-Blockcopolymer und kautschukelastischem Polymerisat mit unter -20°C liegender Glasübergangstemperatur bei hoher Wärmeformbeständigkeit außerdem einen deutlich zu tieferen Temperaturen verschobenen Zäh-Spröd-Übergang zeigen.

Wird eine besonders hohe Benzinbeständigkeit bei ansonsten gleichbleibendem Eigenschaftbild gefordert, ist ein Zusatz von Polyalkylenterephthalat angezeigt.

Gegenstand der Erfindung sind thermoplastische Formmassen enthaltend:

(a) 10 - 98, vorzugsweise 30 - 90 Gew.-Tl. Polydiorganosiloxan-Polycarbonat-Blockcopolymer, mit mittlerem Molekulargewicht $\bar{M}_w$ von 10.000 bis 200.000 und mit einem Gehalt an aromatischen Carbonatstruktureinheiten zwischen etwa 75 Gew.-% und 97,5 Gew.-% und einem Gehalt an Polydiorganosiloxanstruktureinheiten zwischen 25 Gew.-% und 2,5 Gew.-%, wobei die Blockcopolymeren, ausgehend von $\alpha,\omega$-Bishydroxyaryloxyendgruppen-haltigen Polydiorganosiloxanen mit einem Polymerisationsgrad $\bar{P}_n$ von 5 bis 100, hergestellt werden,

(d) 1 - 30, vorzugsweise 5 - 20 Gew.-Tl. kautschukelastischer Polymerisate mit einer Glasübergangstemperatur von unter -20°C und

(e) 0 - 50 Gew.-Tl. thermoplastischer Polyalkylenterephthalate, wobei die Summe der Gewichtsteile der Komponenten (a) + (d) + (e) jeweils 100 Gew.-Tl. beträgt.

Die Komponente (a) kann auch eine Mischung aus Polydiorganosiloxan-Polycarbonat-Blockcopolymeren mit üblichen polysiloxanfreien, thermoplastischen Polycarbonaten sein, wobei der Gesamtgehalt an Polydiorganosiloxanstruktureinheiten in dieser Mischung zwischen 2,5 und 25 Gew.-% beträgt.

Die Polydiorganosiloxan-Polycarbonat-Blockcopolymere sind die im Teil A charakterisierten Blockcopolymere.

Die kautschukelastischen Polymerisate (d) umfassen Copolymerisate - insbesondere Pfropfcopolymerisate - mit kautschukelastischen Eigenschaften, die im wesentlichen aus mindestens zwei der folgenden Monomeren erhältlich sind: Chloropren, Butadien, Isopren, Isobuten, Styrol, Acrylnitril, Ethylen, Propylen, Vinylacetat, (Meth-) Acrylsäureester mit 1 - 18 C-Atomen in der Alkoholkomponente und Kohlenmonoxid, also Polymerisate, wie sie z.B. in "Methoden der Organischen Chemie", (Houben-Weyl), Bd. 14/1, Georg Thieme-Verlag, Stuttgart 1961, S. 393 - 406, und in C. B. Bucknall, "Toughened Plastics", Appl. Science Publishers, London 1977, beschrieben sind. Bevorzugte Polymerisate gemäß Komponente (d) besitzen einen Gelgehalt von über 20, vorzugsweise über 40 Gew.-%.

Bevorzugte Polymerisate gemäß Komponente (d) sind Ethylen/Vinylacetat-Copolymerisate mit 15 - 70 Gew.-% Vinylacetat und Schmelzindices von nicht fließfähig bis 1.000, vorzugsweise von 0,1 - 20, gemessen bei 190°C und 2,16 kp Belastung nach DIN 53 753. Weiterhin bevorzugt sind Terpolymerisate aus Ethylen, Acrylsäurealkylester bzw. Vinylacetat und Kohlenmonoxid.

Bevorzugte Polymerisate gemäß Komponente (d) sind z.B. die sogenannten EPM- bzw. EPDM-Kautschuke, in denen das Gewichtsverhältnis von Ethylen- zu Propylenresten im Bereich von 40 : 60 bis 90 : 10, vorzugsweise 40 : 60 bis 65 : 35, liegt.

Die Mooney-Viskositäten (ML 1+4/100°C gemäß DIN 53 523) der unvernetzten EPM- bzw. EPDM-Kautschuke liegen zwischen 25 und 100 ME, vorzugsweise zwischen 35 und 90 ME. Die Gelgehalte der unvernetzten EPM- bzw. EPDM-Kautschuke liegen unter 1 Gew.-%.

Die verwendeten Ethylen/Propylen-Copolymerisate (EPM) besitzen praktisch keine Doppelbindungen, während die Ethylen/Propylen/Dien-Terpolymerisate (EPDM) 1 - 20 Doppelbindungen/1.000 C-Atome aufweisen können. Als geeignete Dien-Monomere in EPDM seien beispielsweise genannt konjugierte Diene, z.B. Isopren und Butadien, und nichtkonjugierte Diene mit 5 - 25 C-Atomen, z.B. 1,4-Pentadien, 1,4-Hexadien, 1,5-Hexadien, 2,5-Dimethyl-1,5-hexadien und 1,4-Octadien, cyclische Diene, z.B. Cyclopentadien, Cyclohexadien, Cyclooctadien und Dicylopentadien; Alkenylnorbornene, z.B. 5-Ethyliden-2-norbornen, 5-Butyliden-2-norbornen, 2-Methallyl-5-norbornen, 2-Isopropenyl-5-norbornen und Tricyclodiene, z.B. 3-Methyltricyclo(5,2,1,0,2,6)-3,8-decadien. Bevorzugt seien die nichtkonjugierten Diene Hexadien-1,5, Ethylidennorbornen oder Dicyclopentadien angeführt. Der Diengehalt im EPDM beträgt vorzugsweise 0,5 bis 10 Gew.-%.

Derartige EPM- bzw. EPDM-Kautschuke sind z.B. in der DE-OS 28 08 709 (Le A 18 705) beschrieben.

Bevorzugte Polymerisate gemäß Komponente (d) sind auch gegebenenfalls selektiv hydrierte Blockcopolymerisate eines vinylaromatischen Monomeren X und eines konjugierten Diens Y vom X-Y-Typ oder $X-(Y-X)_r$-Typ (mit r = 1-5) oder $Y-(X)_s$-Typ (mit s = 3-5).

Diese Blockcopolymerisate können nach bekannten Verfahren hergestellt werden. Im allgemeinen kann für die Herstellung der geeigneten X-Y-Blockcopolymerisate aus Styrol, α-Methylstyrol, Vinyltoluol usw. und aus konjugierten Dienen, wie Butadien, Isopren usw., die für die Herstellung von Styrol-Dienblockcopolymerisaten verwendete Technologie benutzt werden, die in "Encyclopedia of Polymer Science and Technology", Bd. 15, Interscience, N.Y. (1971), auf den Seiten 508 ff. beschrieben ist. Die selektive Hydrierung kann auf an sich bekannten Wegen durchgeführt werden und bedeutet, daß die ethylenischen Doppelbindungen im wesentlichen vollständig hydriert werden, wobei die aromatischen Doppelbindungen im wesentlichen unbeeinflußt bleiben. Derartige selektiv hydrierte Blockpolymerisate werden z.B. in der DE-OS 3 000 282 beschrieben.

Bevorzugte Polymerisate gemäß Komponente (d) sind z.B. mit Styrol und/oder Acrylnitril und/oder (Meth)-Acrylsäureestern gepfropfte Polybutadiene, Butadien/Styrol-Copolymerisate und Poly(meth)acrylsäureester, z.B. Copolymerisate aus Styrol oder Alkylstyrol und konjugierten Dienen (schlagfestes Polystyrol), d.h. Copolymerisate der in der DE-OS 1 694 173 (= US-PS 3 564 077) beschriebenen Art, mit Acryl- oder Methacrylsäureestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzugte Polymerisate gemäß Komponente (d) sind z.B. Pfropfpolymerisate, die durch Pfropfreaktion von

I. 10 - 40, vorzugsweise 10 - 35, insbesondere 15 - 25 Gew.-%, bezogen auf Pfropfprodukt, mindestens eines (Meth-)Acrylsäureesters und/oder eines Gemisches aus

10 - 35, vorzugsweise 20 - 35 Gew.-%, bezogen auf Gemisch, Acrylnitril und

65 - 90, vorzugsweise 65 - 80 Gew.-%, bezogen auf Gemisch, Styrol auf

II. 60 - 90, vorzugsweise 65 - 90, insbesondere 75 - 85 Gew.-%, bezogen auf Pfropfprodukt, eines Butadien-Polymerisats mit mindestens 70 Gew.-%, bezogen auf II, Butadienresten als Pfropfgrundlage

erhältlich sind, wobei vorzugsweise der Gelanteil der Pfropfgrundlage II = 70 % (in Toluol gemessen), der Pfropfgrad g 0,15 bis 0,55 und der mittlere Teilchendurchmesser $d_{50}$ des Pfropfpolymerisats 0,2 - 0,6, vorzugsweise 0,3 - 0,5 µm betragen.

(Meth-)Acrylsäureester I sind Ester der Acrylsäure bzw. Methacrylsäure und einwertiger Alkohole mit 1 - 18 C-Atomen.

Die Pfropfgrundlage II kann neben Butadienresten bis zu 30 Gew.-%, bezogen auf II, Reste anderer ethylenisch ungesättigter Monomerer, wie z.B. Styrol, Acrylnitril, Ester der Acryl- oder Methacrylsäure mit 1 - 4 C-Atomen in der Alkoholkomponente (wie Methylacrylat, Ethylacrylat, Methylmethacrylat, Ethylmethacrylat), enthalten. Die bevorzugte Pfropfgrundlage II besteht aus reinem Polybutadien.

Da bei der Pfropfreaktion die Pfropfmonomeren I üblicherweise nicht vollständig auf die Pfropfgrundlage II aufpfropfen, werden erfindungsgemäß unter Pfropfpolymerisaten auch solche Produkte verstanden, die neben den eigentlichen Pfropfpolymerisaten auch Homo- und Copolymerisate der eingesetzten Pfropfmonomeren I enthalten. Pfropfpolymerisate im Sinne der Erfindung sind solche, die durch Pfropfpolymerisation von Vinylmonomeren in Gegenwart eines Polymerisats II erhalten werden.

Die mittlere Teilchengröße $d_{50}$ ist der Durchmesser, oberhalb und unterhalb dessen jeweils 50 Gew.-% der Teilchen liegen. Er kann bestimmt werden mittels Ultrazentrifugenmessungen (W. Scholtan, H. Lange, Kolloid. Z. und Z. Polymere 250 (1972), 782 - 796) oder mittels Elektronenmikroskopie und anschließende Teilchenauszählung (G. Kämpf, H. Schuster, Angew. Makromolekulare Chemie <u>14</u>, (1970), 111 - 129) oder mittels Lichtstreuungsmessungen.

Besonders bevorzugte Polymerisate gemäß Komponente (d) sind z.B. auch Pfropfpolymerisate aus

III. 25 - 98 Gew.-%, bezogen auf Komponente (d), Acrylatkautschuk mit einer Glasübergangstemperatur unter -20°C als Pfropfgrundlage und

IV. 2 - 75 Gew.-%, bezogen auf Komponente (d), mindestens eines polymerisierbaren ethylenisch ungesättigten Monomeren, dessen bzw. deren in Abwesenheit von III entstandenen Homo- bzw. Copolymerisate eine Glasübergangstemperatur über 25°C hätten, als Pfropfmonomere.

Die Acrylatkautschuke III der Polymerisate gemäß Komponente (d) sind vorzugsweise Polymerisate aus Acrylsäurealkylester, gegebenenfalls mit bis zu 40 Gew.-% anderer polymerisierbarer ethylenisch ungesättigter Monomerer. Sofern die als Pfropfgrundlage III eingesetzten Acrylatkautschuke - wie auf Seite 24 beschrieben - ihrerseits bereits Pfropfprodukte mit einem Dienkautschukkern sind, wird zur Berechnung dieser Prozentangabe der Dienkautschukkern nicht mitgezählt. Zu den bevorzugten polymerisierbaren Acrylsäureestern gehören $C_1$-$C_8$-Alkylester, beispielsweise Methyl, Ethyl-, Butyl-, Octyl- und 2-Ethylhexylester, Halogenalkylester, vorzugsweise Halogen-$C_1$-$C_8$-Alkylester, wie Chlorethylacrylat, und aromatische Ester wie Benzylacrylat und Phenethylacrylat. Sie können einzeln oder in Mischung eingesetzt werden.

Die Acrylatkautschuke III können unvernetzt oder vernetzt, vorzugsweise partiell vernetzt, sein.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit drei bis acht C-Atomen und ungesättigter einwertiger Alkohole mit 3 - 12 C-Atomen oder gesättigter Polyole mit 2 - 4 OH-Gruppen und 2 - 20 C-Atomen, wie z.B. Ethylenglykoldimethacrylat, Allylmethacrylat; mehrfach ungesättigte heterocyclische Verbindungen, wie z.B. Trivinyl- und Triallylcyanurat und -isocyanurat, Tris-acryloyl-s-triazine, insbesondere Triallylcyanurat; polyfunktionelle Vinylverbindungen, wie Di- und Trivinylbenzol; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 - 2 Gew.-%, bezogen auf Pfropfgrundlage III.

Bei cyclischen vernetzenden Monomeren mit mindestens 3 ethylenisch ungesättigten Gruppen ist es vorteilhaft, die Menge auf 1 Gew.-% der Pfropfgrundlage III zu beschränken.

Bevorzugte "andere" polymerisierbare ethylenisch ungesättigte Monomere, die neben den Acrylsäureestern gegebenenfalls zur Herstellung der Pfropfgrundlage III dienen können, sind z. B. Acrylnitril, Styrol, -Methylstyrol, Acrylamide, Vinyl-$C_1$-$C_6$-alkylether, Butadien, Isopren. Bevorzugte Acrylatkautschuke als Pfropfgrundlage III sind Emulsionspolymerisate, die einen Gelgehalt von 60 Gew.-% aufweisen.

Der Gelgehalt der Pfropfgrundlage III wird bei 25°C in Dimethylformamid bestimmt (M. Hoffmann, H. Krömer, R. Kuhn, Polymeranalytik I und II, Georg Thieme-Verlag Stuttgart 1977).

Acrylatkautschuke als Pfropfgrundlage III können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Der Anteil der Polydien-Kerns in der Pfropfgrundlage III kann 0,1 bis 80, bevorzugt 10 - 50 Gew.-%, bezogen auf III, betragen. Schale und Kern können unabhängig voneinander unvernetzt, teilvernetzt oder hochvernetzt sein.

Besonders bevorzugte Pfropfgrundlagen III für Pfropfpolymerisate gemäß Komponente (d) auf Basis von Polyacrylsäureestern seien nachfolgend zusammengefaßt:

1. Acrylsäureesterpolymerisate und -copolymerisate ohne Dienkautschukkern und

2. Acrylsäureesterpolymerisate und -copolymerisate, die einen Dienkautschukkern enthalten.

Die Pfropfausbeute, d.h. der Quotient aus der Menge des aufgepfropften Monomeren IV und der Menge des eingesetzten Pfropfmonomeren IV, beträgt in der Regel 20 - 80 Gew.-%. Die Bestimmung kann wie bei M. Hoffmann, H. Krömer, R. Kuhn, Polymeranalytik, Bd. 1, Georg Thieme-Verlag, Stuttgart 1977, beschrieben, erfolgen.

Bevorzugte Pfropfmonomere IV sind α-Methylstyrol, Styrol, Acrylnitril, Methylmethacrylat oder Mischungen dieser Monomeren. Bevorzugte Pfropfmonomer-Mischungen sind solche aus Styrol und Acrylnitril im Gewichtsverhältnis 90 : 10 bis 50 : 50.

Solche Pfropfpolymerisate gemäß Komponente (d) auf Basis von Polyacrylsäureestern werden z.B. in der DE-AS 2 444 584 (= US-PS 4 022 748) und in der DE-OS 2 726 256 (= US-PS 4 096 202) beschrieben.

Besonders vorteilhafte Pfropfpolymerisate dieser Art erhält man, wenn man 2 - 20, vorzugsweise 2 - 15 Gew.-%, bezogen auf (d), Monomer IV auf 80 - 98, vorzugsweise

85 - 97 Gew.-%, bezogen auf (d), des vollständig gebrochenen und in Wasser aufgeschlämmten Latex von III in Abwesenheit von Suspendiermittel aufpfropft. Das anfallende pulverförmige Pfropfpolymerisat kann anschließend getrocknet und im gewünschten Verhältnis unter Einwirkung von Scherkräften mit den anderen Komponenten so homogenisiert werden, daß die mittlere Teilchengröße $d_{50}$ von Komponente (d) in der erfindungsgemäßen Mischung 0,05 - 3, vorzugsweise 0,1 - 2, insbesondere 0,2 - 1 µm beträgt.

Der Begriff "in Abwesenheit von Suspendiermittel" bedeutet die Abwesenheit von Stoffen, die nach Art und Menge die Pfropfmonomeren IV in der wäßrigen Phase suspendieren könnten. Die Definition schließt die Anwesenheit von Stoffen nicht aus, die z.B. bei der Herstellung einer gepfropften Pfropfgrundlage III suspendierend gewirkt haben, in derartigen Fällen muß das Koagulations- oder Fällungsmittel, das zum Brechen des Latex III eingesetzt wird, in einer Menge zugesetzt werden, die die suspendierende Wirkung der in der Vorstufe eingesetzten Stoffe kompensiert; mit anderen Worten: Es muß darauf geachtet werden, daß die Pfropfmonomeren IV in der wäßrigen Phase keine (stabile) Emulsion oder Dispersion ergeben.

Ein derart in Abwesenheit von Suspendiermittel hergestelltes Pfropfpolymerisat gemäß Komponente (d) ist als Bestandteil der erfindungsgemäßen Formmassen in den anderen Harzkomponenten zu einer außergewöhnlich niedrigen Teilchengröße verteilbar, die relativ unverändert auch längere Verarbeitungszeiten bei höherer Temperatur übersteht.

Der Begriff "außergewöhnlich niedrige Teilchengröße" meint, daß Anzahl, Form und Größe der einzusetztenden Pfropfpolymerisatteilchen mit Anzahl, Form und Größe der in die geschmolzenen anderen Harzkomponenten eingebrachten Pfropfpolymerisatteilchen auch nach dem Homogenisieren im wesentlichen noch übereinstimmen.

Als Pfropfgrundlage III können auch solche Acrylatkautschuke verwendet werden, die als wäßrige Emulsion (Latex) anfallen und deren Latexpartikel 1 - 20 Gew.-%, vorzugsweise 1 - 10 Gew.-%, bezogen auf III, bereits in wäßriger Emulsion aufgepfropfte Monomere enthalten, deren Homo- bzw. Copolymerisate Glastemperaturen $>0°C$ aufweisen würden.

Bevorzugte derartige aufgepfropfte Monomere sind Alkylacrylate, Alkylmethacrylate, Styrol, Acrylnitril, $\alpha$-Methylstyrol und/oder Vinylacetat.

Derartige Pfropfgrundlagen III werden z.B. durch Emulsionspolymerisation oder Emulsionspfropfpolymerisation hergestellt. Man kann sie aber auch so herstellen, daß man einen Acrylatkautschuk in Lösung oder Masse herstellt, dann die Pfropfmonomeren aufpfropft und anschließend diese Kautschuke in eine wäßrige Emulsion, die sich für weitere Pfropfverfahren eignet, überführt.

Als Pfropfgrundlagen III für Acrylatkautschuke dieser besonderen Ausführungsform eignen sich also vorzugsweise neben den auf Seite 24 aufgezählten Polymerisaten auch in wäßriger Emulsion hergestellte Pfropfpolymerisate aus

Acrylsäureesterpolymerisaten oder -copolymerisaten, die gegebenenfalls einen Dienkautschukkern enthalten, und ethylenisch ungesättigten, polymerisierbaren Monomeren.

Polyalkylenterephthalate gemäß Komponente (e) im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen dieser Reaktionsprodukte.

Bevorzugte Polyalkylenterephthalate gemäß Komponente (e) lassen sich aus Terephthalsäure (oder ihren reaktionsfähigen Derivaten) und aliphatischen oder cycloaliphatischen Diolen mit 2 - 10 C-Atomen nach bekannten Methoden herstellen (Kunststoff-Handbuch, Bd. VIII, S. 695 ff, Carl Hanser Verlag, München 1973).

Bevorzugte Polyalkylenterephthalate gemäß Komponente (e) enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-Reste.

Die bevorzugten Polyalkylenterephthalate (e) können neben Terephthalsäureresten bis zu 20 Mol-% Reste anderer aromatischer Dicarbonsäuren mit 8 - 14 C-Atomen oder aliphatischer Dicarbonsäuren mit 4 - 12 C-Atomen enthalten, wie z.B. Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate (e) können neben Ethylenglykol-bzw. Butandiol-1,4-resten bis zu 20 Mol-% anderer aliphatischer Diole mit 3 - 12 C-Atomen oder cycloaliphatischer Diole mit 6 - 21 C-Atomen enthalten, z.B. Reste von Propandiol-1,3, 2-Ethylpropandiol-1,3, Neopentylglykol, Pentan-diol-1,5, Hexandiol-1,6, Cyclohexandi-methanol-1,4, 3-Methylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(ß-hydroxyethoxy)-benzol, 2,2-Bis-4-hydroxycyclohexyl)-propan, 2,4-Dihydroxy-1,1,3,3-tetramethylcyclobutan, 2,2-Bis-(3-ß-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate gemäß Komponente (e) können durch Einbau relativ kleiner Mengen 3- oder 4-wertiger Alkohole oder 3- oder 4-basiger Carbonsäuren, wie sie z.B. in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate (e), die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Polyalkylenterephthalate (e) sind auch Copolyester, die aus mindestens zwei der obengenannten Alkoholkomponenten hergestellt sind; besonders bevorzugte Copolyester sind Poly-(ethylenglykol/butandiol-1,4)-terephthalate.

Die als Komponente (e) vorzugsweise verwendeten Polyalkylenterephthalate besitzen im allgemeinen eine Intrisic-Viskosität von 0,4 - 1,5 dl/g, vorzugsweise 0,5 - 1,3 dl/g, insbesondere 0,6 - 1,2 dl/g, jeweils gemessen in Phenol/o-Dichlorbenzol (1 : 1 Gew.-Tl.) bei 25°C.

Zur weiteren Erhöhung der Benzinfestigkeit der erfindungsgemäßen Abmischungen, enthaltend die Komponenten (a), (d) und gegebenenfalls (e), können zusätzlich bis zu 5 Gew.-%, bezogen auf das Gesamtgewicht aus den Komponenten (a) + (d) und gegebenenfalls (e), Ethylenhomo- bzw. -copolymerisate zugesetzt werden. Ethylencopolymerisate in diesem Sinne sind Polyethylene, deren Reste neben Ethylenresten bis zu 30 Gew.-%, bezogen jeweils auf Ethylencopolymerisat, aus Resten anderer copolymerisierbarer Monomerer, wie etwa (Meth)-Acrylsäure, bestehen.

Die erfindungsgemäßen Formmassen auf Basis der Komponenten (a), (d) und gegebenenfalls (e) können die in der Polycarbonatchemie und Kautschukchemie und Polyesterchemie üblichen Additive, wie Gleit- und Entformungsmittel, Nukleiermittel, Stabilisatoren, Füll- und Verstärkungsstoffe, Flammschutzmittel sowie Farbstoffe enthalten.

Die gefüllten bzw. verstärkten Formmassen auf Basis der Komponenten (a), (d) und gegebenenfalls (e) können bis zu 30 Gew.-%, bezogen auf die verstärkte Formmasse, Füll- und/oder Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die mit Flammschutzmitteln ausgerüsteten Formmassen auf Basis der Komponenten (a) + (d) und gegebenenfalls (e) können Flammschutzmittel in einer Konzentration von im allgemeinen weniger als 30 Gew.-%, bezogen auf die flammgeschützten Formmassen enthalten. Es kommen alle für Polyester-Formmassen bekannten Flammschutzmittel infrage, wie z.B. Polyhalogendiphenyl, Polyhalogendiphenylether, Polyhalogenphthalsäure und ihre Derivate und Polyhalogenoligo- und -polycarbonate, wobei die entsprechenden Bromverbindungen besonders wirksam sind. Außerdem können Synergisten, wie z.B. Antimontrioxid mitverwendet werden.

Die Herstellung der erfindungsgemäßen Formmassen auf Basis der Komponenten (a), (d) und gegebenenfalls (e) kann in den üblichen Mischaggregaten, wie Walzen, Knetern, Ein- und Mehrwellenextrudern, erfolgen. Die erfindungsgemäßen Formmassen auf Basis der Komponenten (a), (d) und gegebenenfalls (e) lassen sich zu Formkörpern verarbeiten, die auch bei längerer Temperaturbelastung einen außerordentlich geringen Verzug aufweisen. Wenn auch in den meisten Fällen die Harzkomponenten (a), (d) und (e) zweckmäßigerweise in einem einzigen Schritt gemischt

werden, kann es manchmal auch empfehlenswert sein, zuerst eine Komponente wegzulassen und erst zu einem späteren Zeitpunkt zuzumischen.

Für die aufgeführten Beispiele wurden folgende Polymerisate verwendet:

(d1) ein Polymerisat aus 75 Gew.-% Pfropfgrundlage aus vernetztem Polybutadien (Gelgehalt über 70 %, gemessen in Toluol) und 25 Gew.-% Pfropfauflage aus 28 % Acrylnitril und 72 % Styrol, wobei der Teilchendurchmesser der in Latexform vorliegenden Pfropfgrundlage zwischen 0,3 und 0,4 µm liegt.

(d2) ein Polymerisat aus einer Pfropfgrundlage aus 79,2 Gew.-Tl. n-Butylacrylat, das mit 0,4 Gew.-Tl. 1,3-Butylendiacrylat vernetzt ist und in das 0,4 Gew.-Tl. Diallylmaleat als Pfropfmonomere einpolymerisiert sind, und einer Pfropfauflage aus 20 Gew.-Tl. Polymethacrylat.

Für die aufgeführten Beispiele wurde folgendes Polydiorganosiloxan-Polycarbonat-Blockcopolymer verwendet:

(a1) Ein Copolycarbonat auf Basis von Bisphenol A und 4,5 Gew.-% Polydimethylsiloxan der Blocklänge ($\bar{P}_n$) 40, mit einer relativen Lösungsviskosität von 1,31 (gemessen in $CH_2Cl_2$ bei 25°C und einer Konzentration von 0,5 g/100 ml.

Die Bestimmung des Siloxangehaltes, d.h. des Anteils der Dimethylsiloxy-Einheiten in Gew.-%, bezogen auf das Gesamtgewicht des Blockcopolymeren, erfolgte gravimetrisch und durch Kernresonanzspektrometrie. Als mittlere Siloxanblocklänge wird der durch Bestimmung der Endgruppen am Siloxan-Prepolymer ermittelte Polymerisationsgrad $P_n$ angegeben.

(a3) Für Vergleichsbeispiele wurde ein Homopolycarbonat auf Basis von Bisphenol A, mit einer relativen Lösungsviskosität von 1,29 verwendet.

(e) Für die aufgeführten Beispiele wurde außerdem ein Polybutylenterephthalat mit einer Intrinsic-Viskosität von 1,18 dl/g, gemessen in Phenol/o-Dichlorbenzol (1 : 1) bei 25°C, verwendet.

Außerdem wurde z.T. ein Ethylencopolymerisat mit 4 Gew.-% Acrylsäure und 12 Gew.-% tert.-Butylacrylat sowie ein Thermostabilisator und Pigmente in Form eines Konzentrats in Bisphenol A-Polycarbonat verwendet.

Die Herstellung der Formmassen auf Basis der Komponenten (a), (d) und gegebenenfalls (e) erfolgte durch Aufschmelzen und Homogenisieren auf einem geeigneten Aggregat. Die Verarbeitung erfolgte auf einer Spritzgußmaschine.

Die Bestimmung der mechanischen Festigkeit im Zugversuch erfolgte in Anlehnung an DIN 53 455 / ISO R 527 an 70 %-Proportionalstäben.

Die Bestimmung der Kerbschlagzähigkeit erfolgte in Anlehnung an DIN 53 452 /ISO R 179 an Flachstäben (80 mm x 10 mm x 4 mm) mit einer V-förmigen Kerbe der Kerbtiefe 2,7 mm.

Die Bestimmung der kritischen Breite erfolgte nach ASTM D 256.

Der Durchstoßversuch nach DIN 53 443 wird durch die Bewertung des Bruchbildes (3 = zäh - spröd, 4 = zäh) charakterisiert.

Die Bestimmung der Wärmeformbeständigkeit nach Methode Vicat (B) erfolgte gemäß DIN 53 460 /ISO 360. Die Benzinbeständigkeit wurde in einem Schablonentest bei 5' Tauchzeit unter 0,6 % Randfaserdehnung gegen Superbenzinsimulanz Isooctan/Toluol 1 : 1 und Isooctan (42,5 %) / Toluol (42,5 %) / Methanol (15 %) (M-15) geprüft.

**Tabelle 1**

| Zusammensetzung | Dimension | Beispiel 1 (Vergleich) | Beispiel 2 (Vergleich) | Beispiel 3 | Beispiel 4 |
|---|---|---|---|---|---|
| Homopolycarbonat (a3) | % | 95 | 95 | - | - |
| Copolycarbonat (a1) | % | - | - | 95 | 95 |
| Polymerisat (d1) | % | 5 | - | 5 | - |
| Polymerisat (d2) | % | - | 5 | - | 5 |
| Ethylencopolymer | % | - | - | - | - |
| Polybutylenterephthalat(e) | % | - | - | - | - |
| Streckspannung | MPa | 60 | 60 | 55 | 55 |
| Reißfestigkeit | MPa | 68 | 75 | 54 | 52 |
| Reißdehnung | % | 120 | 125 | 80 | 87 |
| Kerbschlagzähigkeit | | | | | |
| - bei Raumtemperatur | $kJ/m^2$ | 47 | 47 | 37 | 41 |
| - bei -40°C | $kJ/m^2$ | 12 | 9 | 27 | 29 |
| Kritische Breite | | | | | |
| -bei Raumtemperatur | mm | >8 | 7,6 - 7,8 | >8 | >8 |
| -bei 0°C | mm | 6,5-6,8 | - | >8 | >8 |
| -bei -20°C | mm | - | - | >8 | >8 |
| Druckstoßversuch bei | | | | | |
| - 40°C: Bruchbild | | 10x4 | 10x4 | 2x4/8x3 | 3x4/7x3 |
| Schädigungsarbeit | J | 75 | 70 | 54 | 50 |
| Vicat B-Temperatur | °C | 145 | 145 | 146 | 145 |
| Benzinbeständigkeit | | | | | |
| gegen Isooctan/Toluol (1:1) | | Bruch | Bruch | Risse | Risse |
| gegen M-15 (Isoocton/Toluol/Methanol) | | Risse | Risse | Bruch | wenig Risse |

Tabelle 1 (Fortsetzung)

| Zusammensetzung | Dimension | Beispiel 5 (Vergleich) | Beispiel 6 (Vergleich) | Beispiel 7 | Beispiel 8 |
|---|---|---|---|---|---|
| Homopolycarbonat (a3) | % | 44 | 44 | - | - |
| Copolycarbonat (a1) | % | - | - | 44 | 44 |
| Polymerisat (d1) | % | 5 | - | 5 | - |
| Polymerisat (d2) | % | - | 5 | - | 5 |
| Ethylencopolymer | % | 2 | 2 | 2 | 2 |
| Polybutylenterephthalat(e) | % | 40 | 40 | 40 | 40 |
| Farbkonzentrat 1) | % | 7 | 7 | 7 | 7 |
| Thermostabilisator 2) | % | 2 | 2 | 2 | 2 |
| Streckspannung | MPa | 55 | 58 | 51 | 54 |
| Reißfestigkeit | MPa | 59 | 59 | 55 | 56 |
| Reißdehnung | % | 136 | 133 | 126 | 128 |
| Kerbschlagzähigkeit | | | | | |
| - bei Raumtemperatur | kJ/m² | 43 | 19 | 43 | 41 |
| - bei -40°C | kJ/m² | 14 | 9 | 15 | 13 |
| Kritische Breite | | | | | |
| - bei Raumtemperatur | mm | 5,8-6,0 | < 4 | > 8 | > 8 |
| - bei 0°C | mm | - | - | 7,0-7,2 | 4,9-5,1 |
| - bei -20°C | mm | - | - | - | - |
| Durchstoßversuch bei | | | | | |
| - 40°C: Bruchbild | | 7x4/3x3 | 2x4/8x3 | 10x4 | 9x4/1x3 |
| Schädigungsarbeit | J | 65 | 69 | 62 | 69 |
| Vicat B-Temperatur | °C | 122 | 123 | 122 | 124 |
| Benzinbeständigk. | | | | | |
| gegen Isooctan/Toluol (1:1) | | Risse | Risse | wenig R. | wenig Risse |
| gegen M-15 (Isooctan/Toluol/Methynol) | | keine Risse | keine Risse | keine Risse | keine Risse |

1) Graupigment; effektive Menge 1 Gew.-%;

2) Tris(3-ethyl-oxetanyl-3-methyl-)phosphit, effektive Menge 0,1 Gew.-%

Tabelle 1 (Fortsetzung)

| Zusammensetzung | Dimension | Beispiel 9 (Vergleich) | Beispiel 10 | Beispiel 11 | Beispiel 12 |
|---|---|---|---|---|---|
| Homopolycarbonat (a3) | % | - | - | - | - |
| Copolycarbonat (a1) | % | 49 | 39 | 34 | 54 |
| Polymerisat (d1) | % | - | 10 | - | - |
| Polymerisat (d2) | % | - | - | 5 | 5 |
| Ethylencopolymer | % | 2 | 2 | 2 | 2 |
| Polybutylenterephthalat (e) | % | 40 | 40 | 50 | 30 |
| Farbkonzentrat 1) | % | 7 | 7 | 7 | 7 |
| Thermostabilisator 2) | % | 2 | 2 | 2 | 2 |
| Streckspannung | MPa | 59 | 44 | 53 | 54 |
| Reißfestigkeit | MPa | 56 | 51 | 51 | 57 |
| Reißdehnung | % | 112 | 150 | 149 | 108 |
| Kerbschlagzähigkeit | | | | | |
| - bei Raumtemperatur | $kJ/m^2$ | 26 | 41 | 34 | 44 |
| - bei -40°C | $kJ/m^2$ | 13 | 17 | 10 | 15 |
| Kritische Breite | | | | | |
| - bei Raumtemperatur | mm | 5,6-5,8 | > 8 | > 8 | > 8 |
| - bei 0°C | mm | - | > 8 | < 4 | 6,5-6,7 |
| - bei -20°C | mm | - | 5,1-5,4 | - | - |
| Durchstoßversuch bei -40°C: Bruchbild | | 10x4 | 10x4 | 7x4/3x3 | 10x4 |
| Schädigungsarbeit | J | 70 | 59 | 54 | 62 |
| Vicat B-Temperatur | °C | 125 | 115 | 123 | 123 |
| Benzinbeständigkeit gegen Isooctan/Toluol (1:1) | | Risse | keine Risse | wenig R. | Risse |
| gegen M-15 (Isooctan/Toluol/Methanol) | | keine Risse | keine Risse | keine Risse | keine Risse |

1) Graupigment; effektive Menge 1 Gew.-%;

2) Tris(3-ethyl-oxetanyl-3-methyl-)phosphit, effektive Menge 0,1 Gew.-%

0135794

Patentansprüche

1. Thermoplastische Formmassen enthaltend

(a) 20 - 80 Gew.-Tl. Polydiorganosiloxan-Polycarbonat-Blockcopolymer, mit mittlerem Molekulargewicht $\bar{M}_w$ von 10.000 - 200.000 und mit einem Gehalt an aromatischen Carbonatstruktureinheiten zwischen etwa 75 Gew.-% und 97,5 Gew.-% und einem Gehalt an Polydiorganosiloxanstruktureinheiten zwischen 25 Gew.-% und 2,5 Gew.-%, wobei die Blockcopolymeren ausgehend von $\alpha,\omega$-Bishydroxyaryloxyendgruppen-haltigen Polydiorganosiloxanen mit einem Polymerisationsgrad $\bar{P}_n$ von 5 - 100 hergestellt werden,

(b) 70 - 5 Gew.-Tl. Pfropfpolymerisat von ethylenisch ungesättigten Monomeren auf Kautschuke und

(c) 5 - 60 Gew.-Tl. eines kautschukfreien, thermoplastischen Vinylmonomerpolymerisats, wobei die Summe der Gewichtsteile (a) + (b) + (c) jeweils 100 Gew.-Tl. beträgt.

2. Thermoplastische Formmassen enthaltend

(a) 10 - 98 Gew.-Tl. Polydiorganosiloxan-Polycarbonat-Blockcopolymer, mit mittlerem Molekulargewicht $\bar{M}_w$ von 10.000 - 200.000 und mit einem Gehalt an aromatischen Carbonatstruktureinheiten zwischen 75 Gew.-% und 97,5 Gew.-% und einem Gehalt an Polydiorganosiloxanstruktureinheiten zwischen 25 Gew.-% und 2,5 Gew.-%, wobei die Blockcopolymeren ausgehend von α,ω-Bishydroxyaryloxyendgruppen-haltigen Polydiorganosiloxanen mit einem Polymerisationsgrad $\bar{P}_n$ von 5 - 100 hergestellt werden,

(d) 1 - 30 Gew.-Tl. kautschukelastischer Polymerisate mit einer Glasübergangstemperatur von unter -20°C und

(e) 0 - 50 Gew.-Tl. thermoplastischer Polyalkylenterephthalate, wobei die Summe der Gew.-Tl. der Komponenten (a) + (d) + (e) jeweils 100 Gew.-Tl. beträgt.

3. Thermoplastische Formmassen gemäß Anspruch 1 oder 2, dadurch gekennzeichnet, daß die Komponente (a) eine Mischung aus Polydiorganosiloxan-Polycarbonat-Blockcopolymeren und üblichen polysiloxanfreien, thermoplastischen Polycarbonaten ist, dadurch gekennzeichnet, daß der Gesamtgehalt an Polydiorganosiloxanstruktureinheiten in dieser Mischung zwischen 2,5 und 25 Gew.-% beträgt.

4. Thermoplastische Formmassen gemäß Anspruch 1, bestehend aus den Komponenten (a) + (b) + (c) sowie Stabilisatoren, Pigmenten, Fließmitteln, Gleitmitteln, Entformungsmitteln, Antistatika und/oder Flammschutzmitteln.

5. Thermoplastische Formmassen gemäß Anspruch 2, enthaltend zusätzlich bis zu 5 Gew.-%, bezogen auf das Gesamtgewicht aus den Komponenten (a) + (d) und gegebenenfalls (e), Ethylenhomo- bzw. -copolymerisate, deren Reste bis zu 30 Gew.-%, bezogen jeweils auf Ethylencopolymerisat, aus Resten anderer copolymerisierbarer Monomerer bestehen.

6. Thermoplastische Formmassen gemäß Anspruch 2, bestehend aus den Komponenten (a) + (d) und gegebenenfalls (e), sowie Gleitmitteln, Entformungsmitteln, Nukleiermitteln, Stabilisatoren, Füllstoffen, Verstärkungsstoffen, Farbstoffen und/oder Flammschutzmitteln.

7. Thermoplastische Formmassen gemäß Anspruch 5, bestehend aus den Komponenten (a) + (d), gegebenenfalls (e), Ethylenhomo- bzw. Copolymerisate, deren Reste bis zu 30 Gew.-%, bezogen jeweils auf Ethylencopolymerisat, aus Resten anderer copolymerisierbarer Monomere bestehen, sowie Gleitmitteln, Entformungsmitteln, Nukleiermitteln, Stabilisatoren, Füllstoffen, Verstärkungsstoffen, Farbstoffen und/oder Flammschutzmitteln.